Europäisches Patentamt

European Patent Office

Office européen des brevets

(19)

(11) Veröffentlichungsnummer: **0 510 438 B1**

## (12) EUROPÄISCHE PATENTSCHRIFT

(45) Veröffentlichungstag der Patentschrift: **22.02.95**

(21) Anmeldenummer: **92106118.0**

(22) Anmeldetag: **09.04.92**

(51) Int. Cl.6: **C08G 18/08**, C08G 18/28,
C08G 18/79, C08G 18/80,
C09D 175/04

(54) **Polyisocyanatgemische und ihre Verwendung.**

(30) Priorität: **23.04.91 DE 4113160**

(43) Veröffentlichungstag der Anmeldung:
**28.10.92 Patentblatt 92/44**

(45) Bekanntmachung des Hinweises auf die
Patenterteilung:
**22.02.95 Patentblatt 95/08**

(84) Benannte Vertragsstaaten:
**AT BE CH DE ES FR GB IT LI NL SE**

(56) Entgegenhaltungen:
EP-A- 0 151 661
EP-A- 0 269 972
EP-A- 0 407 798
EP-A- 0 443 138
US-A- 3 702 776

(73) Patentinhaber: **BAYER AG**

**D-51368 Leverkusen (DE)**

(72) Erfinder: **Laas, Hans Josef, Dr.**
**Merheimer Strasse 249**
**W-5000 Köln 60 (DE)**
Erfinder: **Rettig, Rainer, Dr., z.Zt. Sumitomo**
**Bayer**
**Urethane Ltd.,**
**LS-Divison,**
**13-26, Kukuchi 3-Chome**
**Amagasaki (JP)**
Erfinder: **Halpaap, Reinhard, Dr.**
**In der Hildscheid 6**
**W-5068 Odenthal-Glöbusch (DE)**
Erfinder: **Nachtkamp, Klaus, Dr.**
**Silcherstrasse 13**
**W-4000 Düsseldorf 13 (DE)**

EP 0 510 438 B1

**Beschreibung**

Die Erfindung betrifft neue Gemische von Carboxylgruppen aufweisenden Polyisocyanaten einer mittleren NCO-Funktionalität von mindestens 4,1 und ihre Verwendung als Ausgangsmaterial bei der Herstellung von Polyurethankunststoffen bzw. als Vernetzer für wäßrige Lacke.

In den letzten Jahren stieg die Bedeutung wäßriger Lacke und Beschichtungsmittel aufgrund immer strengerer Emmissionsrichtlinien bezüglich der bei der Lackapplikation freiwerdenden Lösemittel stark an. Obwohl inzwischen bereits für viele Anwendungsbereiche wäßrige Lacksysteme zur Verfügung stehen, können diese das hohe Qualitätsniveau konventioneller, lösemittelhaltiger Lacke hinsichtlich Lösemittel- und Chemikalienbeständigkeit oder gegenüber mechanischer Belastbarkeit oftmals nur durch eine chemische Nachvernetzung während der Filmbildung erreichen.

Versuche, eine Nachvernetzung wäßriger Lacke mit Hilfe freie Isocyanatgruppen tragender Verbindungen zu erreichen, d.h. das auf dem Gebiet lösemittelhaltiger Beschichtungen bewährte Konzept der Polyurethanreaktivlacke auf wäßrige Systeme zu übertragen, wurden bislang nur wenige unternommen.

Die DE-OS 2 708 442 beschreibt den Zusatz monomerer organischer Diisocyanate zur Verbesserung des Eigenschaftsbildes wäßriger Polyurethandispersionen. Nach der DE-OS 3 529 249 lassen sich organische Polyisocyanate zur Erhöhung der Lösemittel- und Chemikalienbestädigkeit sowie zur Verbesserung der Verschleißeigenschaften von Beschichtungen auf Basis von in Wasser dispergierten Homo- und Copolymerisaten einsetzen. Die beschriebenen positiven Effekte auf die Lackeigenschaften lassen sich auf eine durch Reaktion der Isocyanate mit Wasser gebildete "Harnstoffhülle" um die dispergierten Polymerteilchen zurückführen. Die als Zusatzmittel eingesetzten Polyisocyanate wirken somit nicht als Vernetzungsmittel für in Wasser dispergierte Kunststoffe oder Kunststoffvorläufer mit gegenüber Isocyanatgruppen reaktionsfähigen Gruppen.

Die Herstellung eines wäßrigen Polyurethanreaktivsystems aus ausgewählten, Emulgatorwirkung aufweisenden, wäßrigen Polyhydroxylverbindungen und niedrigviskosen freien Polyisocyanaten ist Gegenstand der DE-OS 3 829 587. Dabei werden Lackfilme erhalten, deren Eigenschaftsbild dem typischer, lösemittelhaltiger Zweikomponentenlacke entspricht. Aufgrund der allgemein schlechten Dispergierbarkeit organischer Polyisocyanate in Wasser ist dieses Verfahren jedoch auf spezielle Polyoldispersionen beschränkt. Zur Übertragung auf beliebige wäßrige, gegenüber Isocyanaten reaktive Gruppen tragende Bindemittel bedarf es hydrophilierter, selbstdispergierbarer Polyisocyanatkomponenten.

Aromatische, hydrophil modifizierte Polyisocyanate, wie sie z.B. in der DE-OS 2 359 613 und der EP-A-61 628 beschrieben werden, sind aufgrund ihrer hohen Reaktivität gegenüber Wasser und der damit verbundenen Kohlendioxid-Entwicklung zum Einsatz in wäßrigen Lacksystemen nicht geeignet. Sie finden bevorzugt bei der Schaumstoff-Herstellung und auf dem Klebstoffsektor Verwendung. Isocyanat-funktionelle Vernetzer für wäßrige Beschichtungssysteme sind ausschließlich auf Basis der weniger reaktiven (cyclo)-aliphatischen Polyisocyanate herstellbar.

In der EP-A 206 059 werden hydrophil modifizierte, aliphatische Polyisocyanate als Zusatzmittel für wäßrige Klebstoffe beschrieben. Die Emulgierbarkeit dieser Polyisocyanate wird durch den Einbau Ethylenoxideinheiten aufweisender Polyetherketten erreicht. Für eine Anwendung auf dem Lacksektor sind derart hydrophilierte Polyisocyanate aufgrund der durch den relativ hohen Polyethergehalt verursachten, bleibenden Hydrophilie der Beschichtung jedoch weniger geeignet.

Gemäß einem eigenen älteren Vorschlag (Deutsche Patentanmeldung P 4 001 783.4) lassen sich Uretdion- und Carboxylgruppen-haltige Polyisocyanatgemische mit mittleren Isocyanat-Funktionalitäten von 1,5 bis 4,0 herstellen, in denen die Carboxylgruppen neben freien Isocyanatgruppen lagerstabil vorliegen. Diese Carboxylgruppenhaltigen Uretdionpolyisocyanate lassen sich nach Neutralisation zumindest eines Teils der Carboxylgruppen mit Hilfe tertiärer Amine leicht in Wasser einrühren und sind somit grundsätzlich für die Formulierung wäßriger Zweikomponenten-Polyurethansysteme geeignet.

Die der vorliegenden Erfindung zugrundeliegende Aufgabe bestand darin, Carboxylgruppen aufweisende Polyisocyanate einer (mittleren) NCO-Funktionalität von über 4,0 zur Verfügung zu stellen, die trotz des Vorliegens von Carboxyl- und Isocyanatgruppen im gleichen Molekül lagerstabil sind, sich ohne Schwierigkeiten, gegebenenfalls nach zumindest teilweiser Neutralisation der Carboxylgruppen in Wasser lösen oder dispergieren lassen und als Ausgangskomponenten bei der Herstellung von Polyurethankunststoffen und vor allem als Vernetzer für wäßrige Bindemittel oder Bindemittelkomponenten in wäßrigen Lacken geeignet sind.

Diese Aufgabe konnte mit der Bereitstellung der nachstehend näher beschriebenen Polyisocyanatgemische gelöst werden.

Gegenstand der Erfindung sind Polyisocyanatgemische mit

a) einer mittleren NCO-Funktionalität von mindestens 4,1,

2

b) einem Gehalt an (cyclo)aliphatisch gebundenen Isocyanatgruppen (berechnet als NCO, Molekulargewicht = 42) von 12,0 bis 20,5 Gew.-%,

c) einem Gehalt an chemisch fixierten Carboxylgruppen (berechnet als COOH, Molekulargewicht = 45) von 0,01 bis 5,0 Gew.-% und

d) einem Gehalt an innerhalb von Polyetherketten angeordneten Ethylenoxideinheiten (berechnet als $C_2H_4O$, Molekulargewicht = 44) von 0 bis 10 Gew.-%.

die durch Umsetzung

A) eine Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen mit

B) einer Hydroxycarbonsäure-Komponente, bestehend aus mindestens einer aliphatischen Hydroxycarbonsäure mit mindestens einer sterisch gehinderten Carboxylgruppe, sowie gegebenenfalls

C) einer Polyetheralkohol-Komponente mit einem Gehalt an innerhalb von Polyetherketten eingebauten Ethylenoxideinheiten von mindestens 50 Gew.-%, bestehend aus mindestens einem Polyetheralkohol des Molekulargewichts 350 bis 3500 und/oder gegebenenfalls

D) weiteren, von den Komponenten B) und C) verschiedenen Polyhydroxylverbindungen

unter Einhaltung eines NCO/OH-Äquivalentverhältnisses von 2 : 1 bis 75 : 1 erhalten worden sind.

Gegenstand der Erfindung ist auch die Verwendung dieser Polyisocyanatgemische, gegebenenfalls in zumindest teilweise neutralisierter Form als Ausgangskomponente bei der Herstellung von Polyurethankunststoffen.

Gegenstand der Erfindung ist schließlich auch die Verwendung dieser Polyisocyanatgemische, gegebenenfalls in zumindest teilweise neutralisierter Form als Vernetzer für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die erfindungsgemäß als Ausgangskomponente einzusetzende Komponente A) weist eine (mittlere) NCO-Funktionalität von mindestens 2,1, vorzugsweise von 2,8 bis 4,5 auf. Sie besteht aus mindestens einem organischen Polyisocyanat mit ausschließlich (cyclo)aliphatisch gebundenen Isocyanatgruppen. Es handelt sich bei den Polyisocyanaten bzw. Polyisocyanatgemischen der Komponente A) um beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-OS'en 1 670 666, 3 700 209 und 3 900 053 oder EP-A 336 205 oder EP-A 339396 beispielhaft beschrieben sind. Geeignete Diisocyanate zur Herstellung solcher Polyisocyanate sind grundsätzlich solche des Molekulargewichtsbereichs 140 - 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4-Diisocyanatodicyclohexylmethan oder beliebige Gemische solcher Diisocyanate. Besonders bevorzugt handelt es sich bei der Ausgangskomponente A) um im wesentlichen aus trimerem 1,6-Diisocyanatohexan bestehenden, Isocyanuratgruppen aufweisenden Polyisocyanaten, wie sie durch an sich bekannte, katalytische Trimerisierung und unter Isocyanuratbildung von 1,6-Diisocyanatohexan erhalten werden, die vorzugsweise einen NCO-Gehalt von 19 bis 24 Gew.-% und eine (mittlere) NCO-Funktionalität von 3,4 bis 4,4 aufweisen.

Alle Angaben bezüglich der NCO-Funktionalität der Ausgangspolyisocyanate A) beziehen sich auf die NCO-Funktionalität, die sich aus dem NCO-Gehalt und dem dampfdruckosmometrisch bestimmten Molekulargewicht ergibt.

Bei der Komponente B) handelt es sich um Hydroxycarbonsäuren bzw. um Gemische von Hydroxycarbonsäuren mit sterisch gehinderten Carboxylgruppen. Geeignet sind beispielsweise 2,2-Dimethyl-2-hydroxymethyl-essigsäure (Hydroxy-pivalinsäure), 3-Hydroxy-2,2-dimethylpropansäure, 2,2'-Bis-(hydroxymethyl)-essigsäure oder 2,2-Bis-(hydroxymethyl)-propansäure (Dimethylolpropionsäure, abgekürzt DMPS). DMPS wird besonders bevorzugt als Komponente B) verwendet.

Bei der gegebenenfalls einzusetzenden Ausgangskomponente C) handelt es sich um innerhalb von Polyetherketten eingebaute Ethylenoxideinheiten aufweisende Polyetheralkohole mit einem Ethylenoxidgehalt von mindestens 50 Gew.-%. Solche Verbindungen stellen beispielsweise Alkoxylierungsprodukte ein- oder mehrwertiger Startermoleküle dar, wie sie in der EP-A 206 059 Seite 8, Zeile 26 bis Seite 9, Zeile 17 beschrieben sind. Bei Mitverwendung solcher nichtionischer, hydroxyfunktioneller Emulgatoren werden diese jedoch in so geringer Menge eingesetzt, daß durch sie alleine noch keine ausreichende Wasserdispergierbarkeit erreicht wird.

Bei der ausserdem gegebenenfalls mitzuverwendenden Ausgangskomponente D) handelt es sich um Hydroxylgruppen aufweisende Verbindungen, vorzugsweise Polyhydroxyverbindungen des Molekulargewichtsbereich 62 bis 200, die von den Verbindungen B) und C) verschieden sind. Beispielhaft genannt seien Ethylenglykol, Propylenglykol, Glycerin, Trimethylolpropan, Pentaerythrit oder beliebige Gemische derartiger mehrwertiger Alkohole.

Zur Herstellung der erfindungsgemäßen Polyisocyanatgemische werden die Ausgangsverbindungen bei Temperaturen von 10 bis 100°C, vorzugsweise 20 bis 80°C, unter Einhaltung eines NCO/OH-Äquivalentverhältnisses von 2:1 bis 75:1, vorzugsweise 5:1 bis 20:1 vorzugsweise bis zum Erreichen des theoretisch errechneten NCO-Gehaltes miteinander umgesetzt. Dabei wird die Reaktionstemperatur in Abhängigkeit von der eingesetzten Carboxylkomponente so niedrig gewählt, daß eine Isocyanat/Carboxyl-Reaktion praktisch ausgeschlossen ist. Im übrigen werden Art und Mengenverhältnisse der Ausgangskomponenten im Rahmen der gemachten Angaben so gewählt, daß die resultierenden Umsetzungsprodukte

a) eine mittlere NCO-Funktionalität von mindestens 4,1, vorzugsweise von 4,2 bis 6,0 und besonders bevorzugt von 4,2 bis 4,8,
b) einen NCO-Gehalt von 12,0 bis 20,5, vorzugsweise von 15,0 bis 19,0 Gew.-%,
c) einen Gehalt an chemisch gebundenen Carboxylgruppen von 0,01 bis 5,0 Gew.-%, vorzugsweise von 0,1 bis 3,0 Gew.-% und
d) einen Gehalt an innerhalb von Polyetherketten eingebauten Ethylenoxideinheiten von 0 bis 10 , vorzugsweise von 1 bis 5 Gew.-%

aufweisen.

Die gemachten Angaben bezüglich der NCO-Funktionalität der Verfahrensprodukte beziehen sich auf den Wert der rechnerisch aus Art und Funktionalität der Ausgangskomponente nach der Formel

$$f = \frac{val\ NCO\ -\ val\ OH}{mol\ (NCO\ +\ OH)\ -\ val\ OH}$$

errechnen läßt, wobei davon ausgegangen wird, daß die in dem Reaktionsgemisch vorliegenden Carboxylgruppen nicht und die im Reaktionsgemisch vorliegenden Hydroxylgruppen vollständig mit den Isocyanatgruppen der Komponente A) abreagieren. Falls während der Umsetzung, beispielsweise wegen einer zu hohen Reaktionstemperatur, auch im untergeordneten Umfang eine Reaktion zwischen Isocyanatgruppen der Komponente A) und Carboxylgruppen der Komponente D) stattfinden sollte, würde dies lediglich zu einer weiteren Erhöhung der NCO-Funktionalität führen, so daß die genannten Bedingungen bezüglich der Mindestfunktionalität auf jeden Fall erfüllt sind.

Die gemachten Angaben bezüglich des Gehalts an Carboxyl- und Isocyanatgruppen beziehen sich auf die titrimetrisch bestimmbaren Werte.

Die Umsetzung wird vorzugsweise, jedoch nicht zwingendermaßen, in einem geeigneten gegenüber Isocyanatgruppen inerten Lösemittel durchgeführt. Geeignete Lösemittel sind die an sich bekannten üblichen Lacklösemittel wie z.B. Ethylacetat, Butylacetat, Ethylenglykolmonomethyl- oder ethyletheracetat, 1-Methoxypropyl-2-acetat, 2-Butanon, 4-Methyl-2-pentanon, Cyclonexanon, Toluol, oder deren Gemische, aber auch Lösemittel wie Propylenglykoldiacetat, Diethylenglykoldimethylether, Diethylenglykolethyl- und butyletheracetat, N-Methylpryrrolidon und N-Methylcaprolactam, oder Gemische solcher Lösemittel.

Die erfindungsgemäßen Polyisocyanatgemische stellen klare, praktisch farblose Polyisocyanate der bereits oben genannten Zusammensetzung dar. Lösungen der erfindungsgemäßen Verfahrensprodukte in einem der oben genannten, für das erfindungsgemäße Verfahren geeigneten Lacklösemittel besitzen bei einem Festkörper-Gehalt von 80 Gew.-% Viskositäten zwischen 1500 und 15.000 mPa.s (23°C).

Die so hergestellten erfindungsgemäßen Polyisocyanatgemische lassen während 90-tägiger Lagerung bei Raumtemperatur keinen nennenswerten Abfall des Isocyanat-Gehaltes erkennen. Freie Isocyanat- und Carboxylgruppen liegen lagerstabil nebeneinander vor; eine Isocyanat/Carboxyl-Reaktion ist nicht zu beobachten. Die Polyisocyanategemische lassen sich nach Neutralisation zumindest eines Teils der Carboxylgruppen mit tertiären Aminen leicht durch bloßes Einrühren im Wasser lösen oder dispergieren. Die Herstellung von Lösungen oder Dispersionen der erfindungsgemäßen Polyisocyanatgemische in ihrer zumindest teilweise neutralisierten Form kann auch dergestalt erfolgen, daß man die benötigte Menge des Neutralisationsamins in Wasser vorlegt und anschließend das nicht neutralisierte, erfindungsgemäße Polyisocyanat unter Rühren eindispergiert. Zur Neutralisation geeignete tertiäre Amine sind beispielsweise Trimethylamin, Triethylamin, N-Methylpyrrolidin, N-Methylpiperidin, N-Methylmorpholin oder auch Aminoalkohole wie Triethanolamin, N-Methyldiethanolamin, 2-(N,N-Dimethylamino-)ethanol und 2-(N,N-Dimethylamino-)isopropanol.

Die hervorragende Wasserlöslichkeit bzw. -dispergierbarkeit der erfindungsgemäßen Polyisocyanatgemische in ihrer zumindest teilweise neutralisierten Form bleibt auch während 90-tägiger Raumtemperaturlagerung erhalten und belegt damit ebenfalls die Stabilität der Carboxylgruppen neben freien Isocyanatgruppen. In Lösungen bzw. Dispersionen der neutralisierten, erfindungsgemäßen Verfahrensprodukte verläuft die Reaktion der freien aliphatischen Isocyanatgruppen mit Wasser relativ langsam ab. IR-spektroskopisch kann gezeigt werden, daß 3 bis 4 Stunden nach erfolgter Dispergierung noch weit mehr als die Hälfte der ursprünglich vorhandenen Isocyanatgruppen unverändert vorliegen.

Die Frage, ob es sich bei den wäßrigen Systemen um Lösungen oder Dispersionen handelt, hängt in erster Linie von der Konzentration an hydrophilen Zentren ab und ist bezüglich der weiteren Verwendbarkeit von untergeordneter Bedeutung.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar. Auch hierzu werden vorzugsweise wäßrige Lösungen und Dispersionen der zumindest teilweise neutralisierten Polyisocyanate eingesetzt, die in Kombination mit in Wasser dispergierten Polyhydroxylverbindungen im Sinne von wäßrigen Zweikomponenten-Systemen zur Umsetzung gebracht werden könnnen. Besonders bevorzugt werden die erfindungsgemäßen Polyisocyanatgemische, vorzugsweise in zumindest teilweise neutralisierter Form, als Vernetzer für in Wasser gelöste oder dispergierte Lackbindemittel oder Lackbindemittelkomponenten bei der Herstellung von Beschichtungen unter Verwendung von wäßrigen Beschichtungsmitteln auf Basis derartiger Bindemittel bzw. Bindemittelkomponenten verwendet. Die Vereinigung der Vernetzer mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen. In diesem Zusammenhang seien als Lackbindemittel oder Lackbindemittelkomponenten beispielhaft erwähnt: in Wasser dispergierte Polyurethane, die aufgrund der in den Urethangruppen vorliegenden aktiven Wasserstoffatome mit Polyisocyanaten vernetzbar sind; in Wasser gelöste oder dispergierte, Hydroxylgruppen aufweisende Polyacrylate, insbesondere solche des Molekulargewichtsbereichs 1000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art.

Im allgemeinen besitzen die mit den erfindungsgemäßen Polyisocyanatgemischen formulierten wäßrigen Lacke, denen die üblichen Hilfs- und Zusatzmittel einverleibt werden können, schon bei Raumtemperaturtrocknung gute lacktechnische Eigenschaften.

In den nachfolgenden Beispielen beziehen sich alle Prozentangaben, soweit nicht anders vermerkt, auf das Gewicht.

Beispiele

Beispiel 1 (erfindungsgemäß)

0,5 val eines Isocyanuratgruppen-haltigen Polyisocyanates auf Basis von 1,6-Diisocyanatohexan (HDI) mit einem NCO-Gehalt von 21,5 %, einer Viskosität von 3 000 mPa.s (23 °C) und einem dampfdruckosmometrisch bestimmten mittleren Molekulargewicht von 760 und einer daraus errechneten NCO-Funktionalität von 3,9 werden zusammen mit 0,025 mol Dimethylolpropionsäure (DMPS) und 2,26 mmol eines auf n-Butanol gestarteten, monofunktionellen Polyethylenoxid-Polypropylenoxidpolyethers, mit einem Gehalt an Ethylenoxideinheiten von 80 % und einem mittleren Molekulargewicht von 2 150, in 26,7 g Diethylenglykolbutyletheracetat (BDGA) bei 50 bis 60 °C solange gerührt, bis der titremetrisch bestimmte NCO-Gehalt der Mischung auf 14,1 % abgesunken ist. Nach Abkühlen auf Raumtemperatur liegt eine klare, praktisch farblose Lösung eines erfindungsgemäßen, Carboxylgruppen-haltigen Polyisocyanates vor. Der titremetrisch bestimmte Carboxylgruppen-Gehalt liegt bei 0,79 % (errechnet: 0,84 %). Die berechnete mittlere NCO-Funktionalität ergibt sich zu 4,3. Bei der Berechnung dieser NCO-Funktionalität wurde davon ausgegangen, daß eine Reaktion zwischen Isocyanat- und Carboxylgruppen nicht stattfindet. Die Viskosität (23 °C) beträgt 3 200 mPa.s.

Die Kontrolle des NCO-Gehaltes und der Viskosität (23 °C) über 90 Tage belegt die Lagerstabilität des Produktes bei Raumtemperatur:

| Tage | NCO-Gehalt (%, auf Festkörper | Viskosität (mPa.s) |
|------|-------------------------------|--------------------|
| 0 | 17,6 | 3200 |
| 30 | 17,4 | 3400 |
| 60 | 17,3 | 3500 |
| 90 | 17,2 | 3800 |

Beispiel 2 (erfindungsgemäß)

0,5 val des in Beispiel 1 eingesetzten Isocyanuratgruppen-haltigen Polyisocyanates auf Basis (HDI) werden zusammen mit 0,035 mol DMPS und 2,29 mmol des Polyethylenoxid-polypropylenoxidpolyethers aus Beispiel 1 in 27,0 g N-Methylpyrrolidon (NMP) gelöst und bei 50 bis 60°C bis zum Erreichen eines NCO-Gehaltes von 13,3 % gerührt. Die Lösung des erfindungsgemäßen Carboxylgruppenhaltigen Polyisocyanates weist eine Viskositat (23°C) von 10 900 mPa.s auf. Die wie in Beispiel 1 berechnete NCO-Funktionalität liegt bei 4,6.

50 g dieser Lösung werden mit 1,3 g N-Methylmorpholin (NMM) neutralisiert und anschließend in 120 ml entionisiertes Wasser eingerührt. Es entsteht eine stabile, feinteilige, leicht blaustichtige Dispersion.

Beispiel 3 (Verwendung)

Aus 25,6 g eines hydroxyfunktionellen Polyester-Polyurethanharzes, hergestellt aus:

4,5 % Sojaölfettsäure

12,5 % Trimethylolpropan

22,4 % 1,6-Hexandiol

15,8 % Adipinsäure

18,0 % Isophthalsäure

6,2 % DMPS

und 20,6 % Isophorondiisocyanat,

wird mit Hilfe von 0,74 g Dimethylethanolamin (DMEA) eine 45 %ige wäßrige Dispersion hergestellt. Nach Zugabe von 0,5 g eines handelsüblichen Verlaufsmittels (®Byk 301 der Byk GmbH, Wesel), 0,5 g eines handelsüblichen Benetzungsmittels (Fluortensid FC 170) der Fa. 3M, Düsseldorf-Neuss) und Zugabe von weiteren 15,6 g einer 2 %igen wäßrigen Lösung von DMEA, werden 26,5 g der erfindungsgemäßen Polyisocyanatlösung aus Beispiel 1, die zuvor mit BDGA auf einem Festkörpergehalt von 56 % eingestellt wurde, eingerührt. Die Verarbeitungszeit der so hergestellten, zwei-komponentigen wäßrigen Lackdispersion beträgt mehr als 2 Stunden.

Eine auf eine Glasplatte aufgetragener Film dieser wäßrigen Mischung härtet bei Raumtemperatur innerhalb von 1 Stunde zu einem staubtrockenen, nach 2 Stunden klebfreien, klaren, störungsfreien und hochglänzenden Lackfilm aus. Nach 7 Tagen weist der bei Raumtemperatur getrocknete Lack eine Pendelhärte nach König von 97 s auf.

Ein entsprechend aufgetragender Film, der 45 min bei einer Temperatur von 80°C getrocknet wurde, besitzt eine Pendelhärte nach König von 113 s. Nach einminütiger Einwirkung von Xylol, Toluol, Butylacetat oder auch Methoxypropylacetat (MPA) zeigt sich die Filmoberfläche unverändert. Einminütiges Einwirken von Aceton führt zu einer leichten, bei Verdunstung des Lösungsmittels aber reversiblen Erweichung des Lackfilms.

Ein ohne die Mitverwendung der erfindungsgemäßen Polyisocyanatlösung aber ansonsten aus der oben beschriebenen Polyester-Polyurethandispersion entsprechend hergestellter und 45 min bei 80°C getrockneter Film bleibt klebrig und wird von Xylol, Toluol, Butylacetat, MPA oder Aceton stark angequollen oder gelöst.

**Patentansprüche**

1. Polyisocyanatgemische mit

a) einer mittleren NCO-Funktionalität von mindestens 4,1,

b) einem Gehalt an (cyclo)aliphatisch gebundenen Isocyanatgruppen (berechnet als NCO, Molekulargewicht = 42) von 12,0 bis 20,5 Gew.-%,

c) einem Gehalt an chemisch fixierten Carboxylgruppen (berechnet als COOH, Molekulargewicht = 45) von 0,01 bis 5,0 Gew.-% und

d) einem Gehalt an innerhalb von Polyetherketten angeordneten Ethylenoxideinheiten (berechnet als $C_2H_4O$, Molekulargewicht = 44) von 0 bis 10 Gew.-%,

die durch Umsetzung

A) einer Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen mit

B) einer Hydroxycarbonsäure-Komponente, bestehend aus mindestens einer aliphatischen Hydroxycarbonsäure mit mindestens einer sterisch gehinderten Carboxylgruppe, sowie gegebenenfalls

C) einer Polyetheralkohol-Komponente mit einem Gehalt an innerhalb von Polyetherketten eingebauten Ethylenoxideinheiten von mindestens 50 Gew.-%, bestehend aus mindestens einem Polyetheralkohol des Molekulargewichts 350 bis 3500 und/oder gegebenenfalls

D) weiteren, von den Komponenten B) und C) verschiedenen Polyhydroxylverbindungen

unter Einhaltung eines NCO/OH-Äquivalentverhältnisses von 2 : 1 bis 75 : 1 erhalten worden sind.

2. Polyisocyanatgemische gemäß Anspruch 1, dadurch gekennzeichnet, daß die Komponente A) aus einem im wesentlichen aus trimerem 1,6-Diisocyanatohexan bestehenden Isocyanuratgruppen aufweisenden Polyisocyanat einer (mittleren) NCO-Funktionalität von 3,4 bis 4,4 besteht.

3. Polyisocyanatgemische gemäß Anspruch 1 und 2, dadurch gekennzeichnet, daß die Komponente B) aus 2,2-Bis(hydroxymethyl)-propionsäure besteht.

4. Verwendung der Polyisocyanatgemische gemäß Anspruch 1 bis 3, gegebenenfalls in zumindest teilweise neutralisierter Form, als Ausgangskomponente bei der Herstellung von Polyurethankunststoffen.

5. Verwendung der Polyisocyanatgemische gemäß Anspruch 1 bis 3, gegebenenfalls in zumindest teilweise neutralisierter Form, als Vernetzer für wasserlösliche oder - dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

**Claims**

1. Polyisocyanate mixtures having

a) an average NCO functionality of at least 4.1,

b) a (cyclo)aliphatically bound isocyanate group content (calculated as NCO, molecular weight = 42) of from 12.0 to 20.5% by weight,

c) a chemically fixed carboxyl group content (calculated as COOH, molecular weight = 45) of from 0.01 to 5.0% by weight and

d) an ethylene oxide unit content arranged within polyether chains (calculated as $C_2H_4O$, molecular weight = 44) of from 0 to 10% by weight,

which are obtained by reacting

A) a polyisocyanate component having an (average) NCO functionality of at least 2.1, comprising at least one polyisocyanate having exclusively (cyclo)aliphatically bound isocyanate groups with

B) a hydroxycarboxylic acid component comprising at least one aliphatic hydroxycarboxylic acid having at least one sterically hindered carboxyl group, and optionally

C) a polyether alcohol component having an ethylene oxide unit content of at least 50% by weight incorporated within polyether chains, comprising at least one polyether alcohol of molecular weight 350 to 3500 and/or optionally

D) further polyhydroxyl compounds differing from components B) and C),

with a NCO/OH equivalent ratio of from 2 : 1 to 75 : 1 being maintained.

2. Polyisocyanate mixtures according to Claim 1, characterised in that component A) comprises a polyisocyanate of an (average) NCO functionality of from 3.4 to 4.4 exhibiting isocyanurate groups and comprising substantially trimeric 1.6 diisocyanatohexane.

3. Polyisocyanate mixtures according to Claims 1 and 2, characterised in that component B) comprises 2,2-bis(hydroxymethyl)propionic acid.

4. Use of the polyisocyanate mixtures according to Claims 1 to 3, optionally in at least partially neutralised form, as a starting component in the production of polyurethane resins.

5. Use of the polyisocyanate mixtures according to Claims 1 to 3, optionally in at least partially neutralised form, as cross-linking agents for water-soluble or water-dispersible lacquer binders or lacquer binder components in the production of coatings using aqueous coating compounds based on such binders or binder components.

**Revendications**

1. Mélanges de polyisocyanates, comportant
   a) un nombre moyen de groupes fonctionnels NCO valant au moins 4,1 ;
   b) une teneur en des groupes isocyanates à liaison (cyclo)aliphatique (teneur calculée en NCO ; poids moléculaire = 42) de 12,0 à 20,5 % en poids ;
   c) une teneur en des groupes carboxyles chimiquement fixés (teneur calculée en COOH ; poids moléculaire = 45) de 0,01 à 5,0 % en poids ; et
   d) une teneur en des motifs oxyéthylène incorporés à l'intérieur des chaînes polyéthers (teneur calculée en $C_2H_4O$ ; poids moléculaire = 44) de 0 à 10 % en poids,
   que l'on obtient par la réaction :
   A) d'un composant polyisocyanate présentant un nombre (moyen) de groupes fonctionnels NCO valant au moins 2,1, consistant en au moins un polyisocyanate comportant des groupes isocyanates à liaison exclusivement (cyclo)aliphatique, avec
   B) un composant acide hydroxycarboxylique, consistant en au moins un acide hydroxycarboxylique aliphatique présentant au moins un groupe carboxyle à empêchement stérique, ainsi qu'éventuellement,
   C) avec un composant polyéther-alcool ayant une teneur en des motifs oxyéthylène, incorporés à l'intérieur des chaînes polyéthers, valant au moins 50 % en poids, ce composant consistant en au moins un polyéther-alcool dont le poids moléculaire se situe de 350 à 3 800, et/ou éventuellement avec
   D) d'autres composés polyhydroxylés, qui diffèrent des composants B) et C),
   avec maintien d'un rapport entre les équivalents de NCO et les équivalents de OH valant de 2:1 à 75:1.

2. Mélange de polyisocyanates selon la revendication 1, caractérisé en ce que le composant A) consiste en un polyisocyanate consistant essentiellement en du 1,6-diisocyanatohexanetrimère et présentant des groupes isocyanurates et ayant un nombre (moyen) de groupes fonctionnels NCO de 3,4 à 4,4.

3. Mélange de polyisocyanate selon les revendications 1 et 2, caractérisé en ce que le composant B) consiste en de l'acide 2,2-bis(hydroxyméthyl)propionique.

4. Utilisation des mélanges de polyisocyanates selon les revendications 1 à 3, éventuellement sous une forme au moins partiellement neutralisée, comme composant de départ dans la production de matières plastiques à base de polyuréthanne.

5. Utilisation des mélanges de polyisocyanates selon les revendications 1 à 3, éventuellement sous une forme partiellement neutralisée, comme agent de réticulation pour du liant ou pour du composant de liant pour peinture, hydrosoluble ou dispersable dans de l'eau, lors de la production de revêtements que l'on obtient avec utilisation d'agents aqueux de revêtement à base de tels liants ou de tels composants de liants.